# EUROPÄISCHE PATENTSCHRIFT

(11) **EP 3 393 929 B1**
(45) Veröffentlichungstag und Bekanntmachung des Hinweises auf die Patenterteilung: **01.04.2020**
(21) Anmeldenummer: 16826052.9
(22) Anmeldetag: 23.12.2016
(51) Int. Cl.: B65D 63/10, B65B 13/32

(54) **BANDFÖRMIGES KUNSTSTOFFOBJEKT**
STRIP-SHAPED PLASTIC OBJECT
OBJET EN PLASTIQUE EN FORME DE BANDE

(30) Priorität: 23.12.2015 DE 102015226675
(43) Veröffentlichungstag der Anmeldung: 31.10.2018
(73) Patentinhaber: Teufelberger Gesellschaft m.b.H., 4600 Wels (AT)
(72) Erfinder: GAHLEITNER, Thomas, 4631 Krenglbach (AT)
(74) Vertreter: Burger, Hannes
(86) Internationale Anmeldenummer: PCT/EP2016/082523
(87) Internationale Veröffentlichungsnummer: WO 2017/109158

(56) Entgegenhaltungen:
- EP-A1- 1 657 178
- DE-U1-202009 016 705
- JP-A- S63 176 140
- JP-A- 2005 001 679
- JP-A- 2005 015 946
- JP-A- 2015 110 437

## Beschreibung

Die Erfindung betrifft ein bandförmiges Kunststoffobjekt mit einer Längserstreckung und normal dazu einer Bandbreite und einer Banddicke.

Im Weiteren wird das gegenständliche, bandförmige Kunststoffobjekt, auch als Band bzw. Kunststoffband bezeichnet, wobei die Beschreibung der Merkmale ohne Einschränkung zu übertragen ist.

Bei der Güterverpackung bzw. Gutsicherung auf einem Transportmittel, wie beispielsweise einer Palette, wurden früher oftmals Metallbänder verwendet, da diese die erforderlichen Spann- bzw. Haltekräfte aufnehmen konnten. Mittlerweile wird mit monoaxial bzw. vorwiegend monoaxial verstreckten Kunststoffbändern aus einem zumindest teilkristallinen, thermoplastischen Kunststoffmaterial, ein bandförmiges Kunststoffobjekt geschaffen, welches die zuvor genannten Anforderungen erfüllen kann. Insbesondere sind mit derartigen Kunststoffbändern mittlerweile Zugfestigkeiten erreichbar, die denen von Metallbändern in nichts nachstehen bzw. die Zugfestigkeit von Metallbändern teilweise übertreffen. Im Gegensatz zu Metallbändern, wo zumeist eine Verschlussklammer zur Fixierung einer Umreifung verwendet wird, werden Kunststoffbänder zumeist mittels Reibschweißung oder Heizkeilverschweißung verbunden. Bei einer Reibschweißung werden die zu verbindenden Bänder aufeinandergepresst und eine Bewegung gegeneinander aufgebracht, wodurch sich die Bandoberflächen bis zur Materialerweichung erwärmen und durch den aufgebrachten Druck miteinander verschweißen. Beim Heizkeilverschluss werden die beiden zu verbindenden Bandenden mittels einer beheizten Metallzunge oberflächlich auf Schmelztemperatur gebracht und anschließend aneinander gepresst und so miteinander verbunden.

Aufgrund der Fertigungsschritte bei der Verstreckung des Kunststoffbandes wird dieses eine sehr ebene und insbesondere besonders glatte Oberfläche aufweisen. Im Hinblick auf das durchzuführende Spannen des Kunststoffbandes und das anschließende Verschweißen ist dies jedoch von Nachteil, da es bei einer glatten Oberfläche zu einem Durchrutschen zwischen Spann- bzw. Verschweißwerkzeug und dem Band kommen kann, wodurch die erforderliche Spannkraft nicht erreicht und eine Verschweißung schlecht durchgeführt wird.

Es wäre daher günstig, wenn die Bandoberfläche eine Struktur aufweisen würde, welche die vorteilhafte Eigenschaft hat, dass von einer Spann- bzw. Verschweißvorrichtung eine Kraft auf das Band aufgebracht werden kann, ohne die Gefahr eines Durchrutschens zu bergen.

Aus der JP S63176140 A ist ein Kunststoffband bekannt, welches verstreckt ist, und wobei eine gezielte Oberflächenunebenheit aufgebracht wird. Diese Unebenheit wird durch über die gesamte Bandbreite verlaufende Querrillen gebildet, wobei die Schrift insbesondere offenbart, dass diese Prägung alle Schichten des Bandes betrifft. Eine derartig kantige Prägung die sich über die gesamte Breite und über die gesamte Dicke des Bandes erstreckt, hat den Nachteil, dass dadurch die mikrokristalline Struktur des Kunststoffmaterials beschädigt wird und somit gezielt Schwachstellen im Kunststoffband entstehen, wodurch insbesondere die Zugfestigkeit sinkt.

Aus der JP 2005-001679A ist bekannt, zur Erhöhung der Flexibilität des Bandes, ein rhomboides Prägemuster zu verwenden. Ein derartiges Prägemuster hat jedoch den Nachteil, dass neben der Materialverletzung durch die Tiefenprägung, zusätzlich durch die Spitze des Rhombus eine Kerbwirkung gegeben ist, welche unter Belastung zu einem Aufreißen bzw. Auffasern des Bandes führen kann. Ein derart spitz zulaufendes Prägemuster hat den weiteren Nachteil, dass eine Druckwalze einer Spann- und Verschweißvorrichtung die gewünschte Kraft nicht vollständig auf das Band übertragen kann, da es im Bereich der Spitze des Rhombus zu einem reduzierten Anliegen der Druckwalze an das Prägemuster kommen wird, wodurch die Fläche für die Kraftübertragung verloren geht. Auch kann es in diesem Bereich zu Kraftspitzen kommen, welche ein Aufreißen bzw. Auffasern begünstigen.

Aus der JP 2015-110437 A ist ein Packband aus Kunststoff bekannt, das die Merkmale des Oberbegriffs des Anspruch 1 aufweist und außerdem mit kreisförmige Prägungen ausgestattet ist. Die Nachteile des bekannten Standes der Technik liegen nun darin, dass entweder eine massive, strukturelle Umformung bzw. Deformation des Bandes und damit des gestreckten Kunststoffmaterials erfolgt, oder das vorhandene Prägemuster nur einen Teil der Prägefläche für die Kraftübertragung verwendbar ist. Somit kann es durch die unnötig hohen erforderlichen Zug- bzw. Verschweißkräfte dazu kommen, dass das Kunststoffband genau an den, durch die Prägung eingebrachten Störstellen, eine verringerte mechanische Festigkeit aufweist und somit die Möglichkeit einer Beschädigung und insbesondere eines Reißens gegeben ist.

Die Aufgabe der Erfindung liegt nun darin, ein bandförmiges Kunststoffobjekt dahingehend auszubilden, dass eine möglichst optimale Krafteinleitung von einer Zug- bzw. Verschweißvorrichtung in das Band gegeben ist, wobei die mechanischen Eigenschaften des Kunststoffbandes möglichst unbeeinflusst bleiben sollen.

Die Aufgabe der Erfindung wird gelöst durch ein bandförmiges Kunststoffobjekt mit einer Längserstreckung und normal dazu, einer Bandbreite und einer Banddicke. Das bandförmige Kunststoffobjekt ist aus einem, zumindest teilkristallinen, thermoplastischen Kunststoffmaterial gebildet, welches Kunststoffmaterial in Richtung der Längserstreckung monoaxial, oder vorwiegend monoaxial verstreckt ist, und wobei die Bandbreite und die Längserstreckung eine obere und eine untere Oberfläche ausbilden, welche Oberflächen durch die Banddicke voneinander distanziert sind. Zumindest eine der Oberflächen weist eine Prägung auf, wobei die Prägung durch, über die Bandbreite und in Längserstreckung verteilt angeordnete Prägeabdrucke gebildet ist. Ferner weist der Prägeabdruck eine Länge und eine Breite und eine, sich in Richtung der Banddicke erstreckende Tiefe auf. In Draufsicht auf den Prägeabdruck, ist dessen Umgrenzungslinie durch eine geschlossene ovale Kurve gebildet.

Als thermoplastisches, zumindest teilkristallines Kunststoffmaterial kommen bspw. Polyester, insbesondere PET oder PBT, Polyolefine wie PP oder PE, oder auch Polyamide zur Anwendung. Grundsätzlich sind auch Copolymere, sowie sogenannte Biopolymere, oder aber auch Blends aus verschiedenen Polymeren verwendbar. Dem Kunststoffmaterial können auch Additive bzw. Füllstoffe beigemengt werden. Der Vorteil dieses Materials liegt darin, dass im erwärmten Zustand, eine Verformbarkeit und insbesondere eine Verstreckbarkeit gegeben ist, im erkalteten Zustand jedoch eine sehr hohe mechanische Festigkeit besteht.

Das gegenständliche bandförmige Objekt wird bspw. zur umlaufenden Fixierung von Gütern verwendet. Dabei ist es zumeist erforderlich, dass eine Spannkraft auf das Band aufgebracht wird, um das Gut sicher zu fixieren. Ein Prägeabdruck mit einer als geschlossenen oval ausgebildeten Umgrenzungslinie hat diesbezüglich den Vorteil, dass eine möglichst gleichmäßige Kraftübertragung von einer Spann- bzw. Verschlussvorrichtung auf das bandförmige Objekt erfolgt. Dies ist insbesondere dahingehend von Vorteil, da die teilweise sehr hohen Spannkräfte über einen recht kleinen Oberflächenabschnitt von der Spann- bzw. Verschlussvorrichtung auf das Band übertragen werden müssen. Auch im Hinblick auf eine Verschweißung mittels Reibschweißen, des umlaufenden, und im Verbindungsbereich übereinanderliegenden Bandes, hat diese Ausbildung den Vorteil, dass ein Verhaken verhindert wird und somit der Verschweißvorgang schneller durchgeführt werden kann. Insbesondere wird der Erweichungszustand in kürzerer Zeit erreicht. Bei Prägeabdrucken mit geradlinigen Umgrenzungslinien kann es an den geradlinigen Abschnitten, bzw. an den Übergängen zwischen geradlinigen Abschnitten, zu einem gegenseitigen Verhaken kommen, was sowohl für einen Spannvorgang, als auch für den Verschweißvorgang in einem erhöhten Kraftaufwand resultiert

Eine Weiterbildung besteht darin, dass die Umgrenzungslinie des Prägeabdrucks ellipsenförmig oder eiförmig ausgebildet ist. Derartige Umgrenzungslinien haben den Vorteil, dass damit eine besonders gute Kraftübertragung möglich ist, da sich ein Druckelement einer Spann- bzw. Verschlussvorrichtung, bspw. eine Druckrolle, besonders gut an die Umgrenzungslinie anlegen kann. Insbesondere werden somit lokale Kraftspitzen vermieden.

Nach einer Weiterbildung ist vorgesehen, dass die Länge einen Wert im Bereich von 1.0mm - 2.8mm und die Breite einen Wert im Bereich von 0.5mm - 1.2mm aufweist, wobei die Wertekombinationen 2.0 x 0.84mm bzw. 1.25 x 0.52mm bzw. 2.5 x 1.05mm bevorzugt sind.

Eine Weiterbildung besteht auch darin, dass die Umgrenzungslinie des Prägeabdrucks kreisförmig ausgebildet ist. Eine Kreisform hat den Vorteil, dass sie im Hinblick auf die Längserstreckung bzw. die Bandbreite symmetrisch ist und somit keine Vorzugsausrichtung aufweist.

Nach einer Weiterbildung ist vorgesehen, dass der der Wert des Durchmessers des Prägeabdrucks im Bereich von 0.8mm - 1.6mm liegt, bevorzugt beträgt der Durchmesser 0.89mm oder 1.42mm.

Ferner ist gemäß einer Weiterbildung vorgesehen, dass die Länge des Prägeabdrucks in Richtung der Längserstreckung und die Breite des Prägeabdrucks in Richtung der Bandbreite ausgerichtet ist. Dies hat den Vorteil, dass die Vorzugsausrichtung in Richtung der zu übertragenden Zug- bzw. Haltekräfte ausgerichtet ist.

Die Erfindung besteht darin, dass die verteilt angeordneten Prägeabdrucke der Prägungen, in Richtung der Längserstreckung Spalten und in Richtung der Bandbreite Reihen ausbilden. Dadurch wird eine regelmäßige Anordnung der Prägeabdrucke auf der Oberfläche erreicht.

Eine Weiterbildung kann auch darin bestehen, dass die Ausrichtung der Spalten in Bezug zur Längserstreckung und/oder die Ausrichtung der Reihen in Bezug zur Bandbreite um einen Winkel verschwenkt ist. Die Prägung soll sowohl beim Spannen, als auch beim Verschweißvorgang eine möglichst gute Übernahme der Kräfte gewährleisten. Gerade beim Verschweißvorgang muss in kurzer Zeit eine hohe Energie übertragen werden, um eine Erweichung der beiden aufeinanderliegenden Bandoberflächen zu erreichen. Hierzu kann eine anspruchsgemäße Verschwenkung den Vorteil haben, das quer zur Längserstreckung eine etwas erhöhte Kraftübertragung erreicht wird, und somit beim Reibschweißen die Zeit bis zum Erweichen des Kunststoffmaterials verkürzt wird.

Die Erfindung besteht auch darin, dass in Längserstreckung gesehen, ein Reihenabstand zwischen zwei hintereinander angeordneten Prägeabdrucken das 2-2.5 fache der Länge des Prägeabdrucks beträgt, und ferner, dass in Bandbreite gesehen, ein Spaltenabstand zwischen zwei nebeneinander angeordneten Prägeabdrucken kleiner gleich dem Doppelten der Breite des Prägeabdrucks ist.

Nach eine Weiterbildung ist vorgesehen, dass in Richtung der Längserstreckung gesehen, zwischen hintereinander angeordneten Reihen ein Spaltenversatz und ein Reihenversatz besteht, insbesondere beträgt der Spaltenversatz 50% des Spaltenabstands und der Reihenversatz 50% des Reihenabstandes. Mit einem Spalten- bzw. Reihenversatz wird eine dichtere Anordnung der Prägeabdrucke erreicht. Besonders von Vorteil ist ein Versatz um jeweils 50%, da dadurch eine optimal dichte Anordnung der Prägeabdrucke erreicht wird. In diesem Fall sind die nebeneinander angeordneten Prägeabdrucke einer nachfolgenden Reihe genau in Freiräumen zwischen den nebeneinander angeordneten Prägeabdrucken der vorherigen Reihe angeordnet.

Nach einer Weiterbildung liegt der Wert der Tiefe des Prägeabdrucks im Bereich von 50µm-300µm liegt, insbesondere bei 150µm. Da ein gegenständlicher Kunststoff im Wesentlichen nicht bzw. nur sehr geringfügig komprimierbar ist, wird es beim Prägevorgang zu einer Verdrängung des Materials durch den niederdrückenden Prägestempel kommen. Ein zu hoher Prägedruck kann ggf. das Kunststoffmaterial beschädigen, ferner steigen der maschinelle Aufwand und damit die Fertigungskosten bei hohen Prägedrücken stark an, sodass mit einem zweckmäßigen Maximaldruck eine Prägetiefe von 300µm erreicht werden kann. Bevorzugt liegt die Prägetiefe bei 150µm. Es ist jedoch auch möglich, dass eine flache Prägung verwendet wird, hierbei liegt die Tiefe des Prägeabdrucks im Bereich von wenigen µm, wobei mit einer flachen Prägung eher eine Oberflächenbemusterung erfolgt.

Eine Weiterbildung besteht auch darin, dass beide Oberflächen eine Prägung aufweisen. Für die weitere maschinelle Verarbeitung bzw. Anwendung kann es von Vorteil sein, wenn ohne Prüfung der Ausrichtung sichergestellt ist, dass stets eine geprägte Oberfläche zum Arbeitsbereich ausgerichtet ist. Auch kann es für den Verschweißvorgang vorteilhaft sein, wenn zwei geprägte Oberflächen verschweißt werden. Bevorzugt wird ein Reibschweißverfahren verwendet wodurch sich gemäß der Weiterbildung der Vorteil ergibt, dass sich die eingebrachte Energie auf eine kleinere Fläche verteilt, wodurch es schneller zu einem Erweichen kommt, was sich insgesamt in einem geringeren Energiebedarf auswirkt.

Nach einer Weiterbildung ist vorgesehen, dass sich die Prägung der beiden Oberflächen unterscheidet, insbesondere dass die jeweiligen Prägeabdrucke der beiden Prägungen eine unterschiedliche Umgrenzungslinie aufweisen. Bei einem Einsatz als Gutsicherung werden an das gegenständliche Kunststoffobjekt zwei Anforderungen gestellt. Einerseits muss die Prägung beim Spannen des Bandes eine möglichst gute Kraftübertragung von der Spann- bzw. Verschlussvorrichtung auf das Band gewährleisten, wobei hier die Kraftrichtung weitestgehend in Richtung der Längserstreckung wirken wird. Andererseits wird beim Verschweißen die Reibbewegung auch von der Längsrichtung abweichende Bewegungskomponenten aufweisen. Mit dieser Weiterbildung kann gewährleistet werden, dass eine Bandoberfläche eine für den Spannvorgang, und die andere Bandoberfläche eine für den Schweißvorgang optimierte Prägung aufweist. Auch kann dadurch eine durch den Prägevorgang bedingte strukturelle Schwächung des Kunststoffs abgemildert werden.

Nach einer Weiterbildung ist vorgesehen, dass in Draufsicht auf das bandförmige Kunststoffobjekt, zwischen der Prägung der beiden Oberflächen, ein Versatz in Richtung der Längserstreckung und/oder ein Versatz in Richtung der Bandbreite besteht. Diese Weiterbildung kann für die Kraftübertragung von der Spann- bzw. Verschlussvorrichtung auf das Kunststoffband vorteilhaft sein. Da jedoch eine Prägung bzw. der einzelne Prägeabdruck, auch eine strukturelle Schwächung bedeutet, wird mit dieser Weiterbildung erreicht, dass strukturelle Schwachpunkte nicht genau übereinanderliegen. Der Vollständigkeit halber wird jedoch erwähnt, dass auch eine versatzlose Anordnung möglich ist, wenn dies für den geplanten Einsatzfall zweckmäßig ist.

Eine weitere vorteilhafte Ausbildung besteht auch darin, dass der Versatz 50% des Spaltenabstands und/oder 50% des Reihenabstandes beträgt.

Nach einer Weiterbildung ist vorgesehen, dass in Draufsicht auf das bandförmige Kunststoffobjekt, die Ausrichtung der beiden Prägungen gegeneinander um einen Winkel verschwenkt ist, insbesondere um 90°. Wie bereits zuvor beschrieben, kann somit eine auf den jeweiligen Einsatzfall der Oberfläche optimierte Prägung gebildet werden.

Eine Weiterbildung der vorherigen Ausbildung besteht darin, dass der Winkel 90° beträgt und dass die Prägeabdrucke der beiden Prägungen derart ausgebildet sind, das bei einer unverschwenkten Anordnung der beiden Prägungen, diese bezüglich ihrer Länge und Breite bzw. Breite und Durchmesser, übereinstimmen. Insbesondere bedeutet dies, dass zwei nebeneinander angeordnete Prägeabdrucke, also zwei Breiten, der Steg zwischen den Prägeabdrucken sowie jeweils eine Steghälfte zu beiden Seiten der Breiten, der Länge und jeweils einer Steghälfte zu beiden Seiten der Länge, des Prägeabdrucks entsprechen.

Nach einer Weiterbildung ist auch vorgesehen, dass die Umgrenzungslinie stückweise gerade Abschnitte und/oder unterschiedliche Kurvenradien aufweist.

Zum besseren Verständnis der Erfindung wird diese anhand der nachfolgenden Figuren näher erläutert.

Es zeigen jeweils in stark vereinfachter, schematischer Darstellung:
- Fig. 1: a) und b) Eine mögliche Ausführung des gegenständlichen bandförmigen Kunststoffobjekts mit einer ovalen Prägung, in Draufsicht und in Schnittdarstellung;
- Fig. 2: eine weitere mögliche Ausführung mit einer runden Prägung.

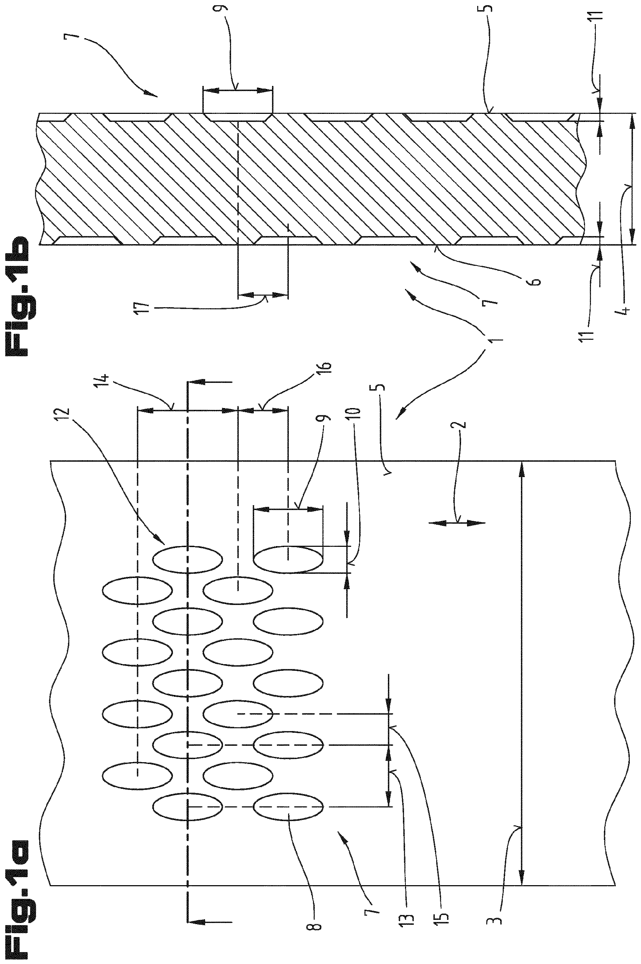

Fig. 1 zeigt das gegenständliche bandförmige Kunststoffobjekt 1, einmal in einer Draufsicht (Fig. 1a) und als Schnittdarstellung (Fig. 1b). Das Kunststoffobjekt 1 weist eine Längserstreckung 2 und normal dazu, eine Bandbreite 3 und eine Banddicke 4 auf. Die Bandbreite 3 und die Längserstreckung 2 bilden eine obere 5 und eine untere 6 Oberfläche aus, welche Oberflächen 5, 6 durch die Banddicke 4 voneinander distanziert sind.

Eine der Oberflächen 5, 6 weist eine Prägung 7 auf, welche Prägung 7 durch, über die Bandbreite 3 und in Längserstreckung 2 verteilt angeordnete Prägeabdrucke 8 gebildet ist. Ein Prägeabdruck 8 weist eine Länge 9 und eine Breite 10, und eine sich in Richtung der Banddicke 4 erstreckende Tiefe 11 auf. In Draufsicht auf den Prägeabdruck 8 ist dessen Umgrenzungslinie 12 durch eine geschlossene, ovale Kurve gebildet, wobei gemäß einer ersten Ausführung, die Umgrenzungslinie 12 ellipsenförmig oder eiförmig ausgebildet ist. Gemäß einer Ausführung weist die Länge 9 einen Wert auf, der im Bereich von 1mm bis 2,8mm liegt, die Breite 10 weist einen Wert auf, der in einem Bereich von 0,5mm bis 1,2mm liegt. Besonders bevorzugte Ausführungsvarianten weisen eine Länge von 1,25 und eine Breite von 0,52 mm bzw. eine Länge von 2mm und eine Breite von 0,84mm mm bzw. eine Länge von 2,5mm und eine Breite von 1,05mm auf. Bevorzugt sind die verteilt angeordneten Prägeabdrucke 8 der Prägung 7 in Richtung der Längserstreckung 2 in Spalten und in Richtung der Bandbreite 3 in Reihen angeordnet, wobei zwischen den Spalten ein Spaltenabstand 13 und zwischen den Reihen ein Reihenabstand 14 besteht. Gemäß der bevorzugten Ausführungsformen beträgt die Kombination aus Spaltenabstand und Reihenabstand 0,85 / 2,63mm und 1,54 / 4,50mm.

Insbesondere ist der Spaltenabstand 13 kleiner gleich dem Doppelten der Breite 10 des Prägeabdrucks 8. Der Reihenabstand 14 liegt im Bereich des 2 bis 2,5-fachen der Länge 9 des Prägeabdrucks 8.

Zur Erreichung einer möglichst dichten Packung der Prägeabdrucke 8 zur Bildung der Prägung 7 ist vorgesehen, dass nebeneinander angeordnete Spalten einer Reihe um einen Spaltenversatz 15, und nacheinander angeordnete Reihen einer Spalte um einen Reihenversatz 16 angeordnet sind. Bevorzugt beträgt der Spaltenversatz 15 50 % des Spaltenabstandes 13 und der Reihenversatz 16 beträgt bevorzugt 50 % des Reihenabstandes 14.

Es wird explizit darauf hingewiesen, dass zur Vereinfachung der Darstellung und zum Erhalt der Übersichtlichkeit in den Figuren, die Prägung nur in einem Teilbereich der dargestellten Oberfläche eingezeichnet ist. Selbstverständlich ist die Prägung auf der gesamten Oberfläche verteilt angeordnet.

Fig. 1b zeigt eine Schnittdarstellung aus Fig. 1a, wobei hier eine mögliche Ausführungsvariante dargestellt ist, bei der auf der oberen 5 und unteren 6 Oberfläche eine Prägung 7 angeordnet ist. Gemäß einer möglichen Weiterbildung besteht zwischen den beiden Prägungen 7 auf den beiden Oberflächen 5, 6 ein Versatz 17, wobei in Fig. 1b aus Darstellungsgründen lediglich ein Versatz 17 in Richtung der Längserstreckung 2 darstellbar ist. Es ist jedoch auch möglich, dass zwischen den beiden Prägungen 7 kein Versatz 17 besteht, und die beiden Prägungen 7 somit deckungsgleich auf den Oberflächen 5, 6 angeordnet sind. Ebenso ist möglich, dass oft in beiden Oberflächen 5, 6 zwei verschiedene Prägungen 7 angeordnet sind, insbesondere dass sich die Prägeabdrucke 8 auf der oberen von denen auf der unteren 6 Oberfläche unterscheiden. Auch ist es möglich, dass die Prägeabdrucke 8 zusätzlich oder alternativ bezüglich der Längserstreckung um einen Winkel verschwenkt angeordnet sind.

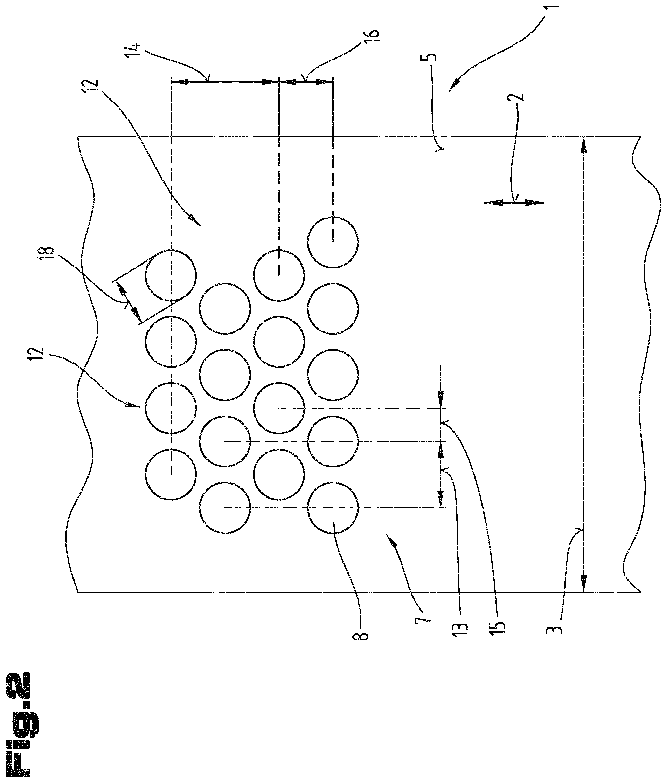

Fig. 2 zeigt eine weitere mögliche Ausführung des gegenständlichen Kunststoffobjekts 1 mit einer auf einer oberen Oberfläche 5 aufgebrachten Prägung 7, wobei die Prägung 7 durch regelmäßig auf der Oberfläche 5 angeordnete Prägeabdrucke 8 gebildet ist. Die Prägeabdrucke weisen gemäß dieser Ausführung eine Umgrenzungslinie 12 auf, welche Umgrenzungslinie 12 kreisförmig ausgebildet ist. Der Durchmesser eines Prägeabdruckes 8 liegt im Bereich zwischen 0,8mm und 1,6mm, wobei ein Durchmesser von 0,89mm oder 1,42mm bevorzugt ist.

Die einzelnen Prägeabdrucke 8 der Prägung 7 sind wiederum gleichmäßig auf der oberen Oberfläche 5 verteilt und bilden in der Anordnung Spalten und Reihen aus. Die einzelnen Spalten sind dabei im Spaltenabstand 13 bzw. im Reihenabstand 14 zweier nachfolgenden Reihen mit gleicher Spaltenausrichtung angeordnet. Gemäß der bevorzugten Ausführungsformen beträgt die Kombination aus Spaltenabstand und Reihenabstand 1,23 / 2,49mm und 1,80 / 3,62mm.

Zur Erreichung einer möglichst dichten Packung der Prägeabdrucke 8 zur Bildung der Prägung 7 kann auch gemäß dieser Ausbildung vorgesehen sein, dass zwischen benachbarten Spalten einer Reihe ein Spaltenversatz 15 und/oder zwischen nachfolgenden Reihen einer Spalte ein Reihenversatz 16 besteht. Bevorzugt wird dieser Spaltenversatz 15 bzw. Reihenversatz 50 % des Durchmessers des Prägeabdruckes 8 betragen.

In den Figuren 1a und 2 ist jeweils die Draufsicht auf die Prägeabdrucke 8 dargestellt, wobei aus Vereinfachungsgründen die Flanken der Prägeabdrucke 8 nicht dargestellt sind. In der Schnittdarstellung in Figur 1b sind diese Flanken erkennbar. Die angegebenen bevorzugten Durchmesserwerte von 0,89mm für eine Feinprägung und 1,42mm für eine Grobprägung, entsprechen somit dem Durchmesser des Prägeabdrucks 8 am Grund der Prägung (in der Tiefe des Konststoffmaterials). Ein zur Herstellung eines Prägeabdrucks 8 verwendeter Stempel hat bspw. einen trapezförmigen Querschnitt und weist an der Spitze die bevorzugten Durchmesserwerte von 0,89mm bzw. 1,42mm auf. Mit einer Höhe des Stempels von 0,4mm und einem Flankenwinkel von 23° ergibt sich an der Basis ein Durchmesserwert von 1,23mm bzw. 1,76mm. Da der Prägestempel und somit die einzelnen Stempel, wie bereits beschrieben, nie die vollen 0,4mm in das Kunststoffband gedrückt werden, sind die Durchmesser der Prägeabdrucke 8 an der Bandoberfläche (5, 6) entsprechend kleiner und lassen sich unter Kenntnis der tatsächlichen Prägetiefe trigonometrisch ermitteln.

Aufgrund zweier Effekte beim Auf- bzw. Einbringen der Prägeabdrucke 8, werden trotz kreisrunder Stempel, die Prägeabdrucke 8 ein von der Kreisform leicht abweichendes Erscheinungsbild haben. Das in Längsrichtung vorgestreckte Kunststoffband läuft unter einer Prägewalze bzw. zwischen zwei Prägewalzen durch. Aufgrund der Verstreckung wird der in das Band eindrückende Stempel das Kunststoffmaterial in Band-Querrichtung leichter verdrängen können, als in Längsrichtung. Nach dem Durchlauf, beim Abheben des Stempels, wird es in Längsrichtung gesehen, zu einer geringen Rückbewegung des Kunststoffmaterials bekommen, sodass der kreisrund geprägte Prägeabdruck 8, als leicht ovale Form bestehen bleibt.

Als zweiter Effekt ist ein Entspannen des vorgestreckten Kunststoffbands zu identifizieren. Das Kunststoffband läuft unter zum Teil hohem Zug durch die Prägevorrichtung. Nachdem diese Zugspannung wegfällt, bspw. nach Auslaufen aus der Herstellungsvorrichtung bzw. durch ein ggf. nachgeschaltetes, geringfügiges Erwärmen, kommt es zu einer Verkürzung des Kunststoffbandes, und zwar vornehmlich in Längsrichtung. Die Verkürzung kann 3-12% betragen, was wiederum zu einer Deformation (Stauchung in Längsrichtung) der kreisrunden Prägung führen wird.

Mit diesen vorteilhaften Ausführungen wird erreicht, dass eine sehr gute Kraftübertragung von einer Spannvorrichtung auf das Kunststoffband gegeben ist, wobei diese Kraftübertragung bzw. Kraftwirkung vornehmlich in Richtung der Längserstreckung wirken wird. Gleichzeitig lässt sich auch gewährleisten, dass von der Verschweißvorrichtung eine ausreichende Kraft- bzw. Bewegungsenergie auf das Kunststoffobjekt übertragen werden kann, um den Verschweißvorgang, zumeist ein Reibschweißen, zuverlässig durchführen zu können. Somit ist in vorteilhafterweise ein bandförmiges Kunststoffobjekt geschaffen, welches den Anforderungen im Alltagseinsatz besonders gut angepasst bzw. optimiert ist.

Abschließend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

In der Fig. 2 ist eine weitere und gegebenenfalls für sich eigenständige Ausführungsform des bandförmigen Kunststoffobjekts gezeigt, wobei wiederum für gleiche Teile gleiche Bezugszeichen bzw. Bauteilbezeichnungen wie in der vorangegangenen Fig. 1 verwendet werden. Um unnötige Wiederholungen zu vermeiden, wird auf die detaillierte Beschreibung in der vorangegangenen Fig. 1 hingewiesen bzw. Bezug genommen.

Die Ausführungsbeispiele zeigen mögliche Ausführungsvarianten des gegenständlichen Kunststoffbandes, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Des Weiteren können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Vor allem können die einzelnen in den Figuren gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

Der Ordnung halber sei abschließend darauf hingewiesen, dass zum besseren Verständnis des Aufbaus des bandförmigen Kunststoffobjekts diese bzw. deren Bestandteile teilweise unmaßstäblich und/oder vergrößert und/oder verkleinert dargestellt wurden.

### Bezugszeichenaufstellung

- 1: Kunststoffobjekt
- 2: Längserstreckung
- 3: Bandbreite
- 4: Banddicke
- 5: obere Oberfläche
- 6: untere Oberfläche
- 7: Prägung
- 8: Prägeabdruck
- 9: Länge
- 10: Breite
- 11: Tiefe
- 12: Umgrenzungslinie
- 13: Spaltenabstand
- 14: Reihenabstand
- 15: Spaltenversatz
- 16: Reihenversatz
- 17: Versatz

## Patentansprüche

1. Kunststoffband (1) mit einer Längserstreckung (2) und normal dazu, einer Bandbreite (3) und einer Banddicke (4),
wobei das Kunststoffband (1) ein, zumindest teilkristallines, thermoplastisches Kunststoffmaterial umfasst,
welches Kunststoffmaterial in Richtung der Längserstreckung (2) monoaxial, oder vorwiegend monoaxial verstreckt ist,
wobei das Kunststoffband (1) in Richtung der Längserstreckung (2) und in Richtung der Bandbreite (3) betrachtet jeweils einen durchgängigen Querschnitt aufweist, und
wobei die Bandbreite (3) und die Längserstreckung (2) eine obere (5) und eine untere Oberfläche (6) ausbilden, welche Oberflächen (5, 6) durch die Banddicke (4) voneinander distanziert sind, und
wobei zumindest eine der Oberflächen (5, 6) eine Prägung (7) aufweist, welche Prägung (7) durch, über die Bandbreite (3) und in Längserstreckung (2) verteilt angeordnete Prägeabdrucke (8) gebildet ist, welche verteilt angeordneten Prägeabdrucke (8) der Prägung (7) in Richtung der Längserstreckung (2) Spalten und in Richtung der Bandbreite (3) Reihen ausbilden, **dadurch gekennzeichnet, dass**
- - in Draufsicht auf den Prägeabdruck (8), dessen Umgrenzungslinie (12) durch eine geschlossene ovale Kurve gebildet ist,
- der Prägeabdruck (8) eine Länge (9) und eine Breite (10) und eine, sich in Richtung der Banddicke (4) erstreckende Tiefe (11) aufweist, wobei
in Längserstreckung (2) gesehen, ein Reihenabstand (14) zwischen zwei hintereinander angeordneten Prägeabdrucken (8) das 2-2.5 fache der Länge (9) des Prägeabdrucks (8) beträgt, und in Bandbreite (3) gesehen, ein Spaltenabstand (13) zwischen zwei nebeneinander angeordneten Prägeabdrucken (8) kleiner gleich dem Doppelten der Breite (10) des Prägeabdrucks (8) ist.

2. Kunststoffband nach Anspruch 1, **dadurch gekennzeichnet, dass** die Umgrenzungslinie (12) des Prägeabdrucks (8) ellipsenförmig oder eiförmig ausgebildet ist.

3. Kunststoffband nach Anspruch 2, **dadurch gekennzeichnet, dass** die Länge (9) einen Wert im Bereich von 1.0mm - 2.8mm und die Breite (10) einen Wert im Bereich von 0.5mm - 1.2mm aufweist, wobei die Wertekombinationen 2.0 x 0.84mm bzw. 1.25 x 0.52mm bzw. 2.5 x 1.05mm bevorzugt sind.

4. Kunststoffband nach Anspruch 1, **dadurch gekennzeichnet, dass** die Umgrenzungslinie (12) des Prägeabdrucks (8) kreisförmig ausgebildet ist.

5. Kunststoffband nach Anspruch 4, **dadurch gekennzeichnet, dass** der Wert des Durchmessers (18) des Prägeabdrucks (8) im Bereich von 0.8mm - 1.6mm liegt, bevorzugt beträgt der Durchmesser (18) 0.89mm oder 1.42mm.

6. Kunststoffband nach einem der Ansprüche 1 bis 5, **dadurch gekennzeichnet, dass** die Länge (9) des Prägeabdrucks (8) in Richtung der Längserstreckung (2) und die Breite (10) des Prägeabdrucks (8) in Richtung der Bandbreite (3) ausgerichtet ist.

7. Kunststoffband nach einem der Ansprüche 1bis 6, **dadurch gekennzeichnet, dass** die Ausrichtung der Spalten in Bezug zur Längserstreckung (2) und/oder die Ausrichtung der Reihen in Bezug zur Bandbreite (3) um einen Winkel verschwenkt ist.

8. Kunststoffband nach einem der Ansprüche 1 bis 7, **dadurch gekennzeichnet, dass** in Richtung der Längserstreckung (2) gesehen, zwischen hintereinander angeordneten Reihen ein Spaltenversatz (15) und ein Reihenversatz (16) besteht, insbesondere beträgt der Spaltenversatz (15) 50% des Spaltenabstands (13) und der Reihenversatz (16) 50% des Reihenabstandes (14).

9. Kunststoffband nach einem der Ansprüche 1 bis 8, **dadurch gekennzeichnet, dass** die Tiefe (11) des Prägeabdrucks (8) im Bereich von 50µm-300µm liegt, insbesondere 150µm beträgt.

10. Kunststoffband nach einem der Ansprüche 1 bis 9, **dadurch gekennzeichnet, dass** beide Oberflächen (5, 6) eine Prägung (7) aufweisen.

11. Kunststoffband nach Anspruch 10, **dadurch gekennzeichnet, dass** sich die Prägung (7) der beiden Oberflächen unterscheidet, insbesondere dass die jeweiligen Prägeabdrucke (8) der beiden Prägungen (7) eine unterschiedliche Umgrenzungslinie (12) aufweisen.

12. Kunststoffband nach Anspruch 10 oder 11, **dadurch gekennzeichnet, dass** in Draufsicht auf das Kunststoffband (1), zwischen der Prägung (7) der beiden Oberflächen (5, 6) ein Versatz in Richtung der Längserstreckung (2) und/oder ein Versatz in Richtung der Bandbreite (3) besteht.

13. Kunststoffband nach Anspruch 12, **dadurch gekennzeichnet, dass** der Versatz 50% des Spaltenabstands (13) und/oder 50% des Reihenabstandes (14) beträgt.

14. Kunststoffband nach einem der Ansprüche 10 bis 13, **dadurch gekennzeichnet, dass** in Draufsicht auf das Kunststoffband (1), die Ausrichtung der beiden Prägungen (7) gegeneinander um einen Winkel verschwenkt ist, insbesondere um 90°.

15. Kunststoffband nach Anspruch 14, **dadurch gekennzeichnet, dass** der Winkel 90° beträgt und
dass die Prägeabdrucke (8) der beiden Prägungen (7) derart ausgebildet sind, das bei einer unverschwenkten Anordnung der beiden Prägungen (7), diese bezüglich ihrer Länge (9) und Breite (10) bzw. Breite (10) und Durchmesser, übereinstimmen.

16. Kunststoffband nach einem der Ansprüche 1 bis 15, **dadurch gekennzeichnet, dass** die Umgrenzungslinie (12) stückweise gerade Abschnitte und/oder unterschiedliche Kurvenradien aufweist.

## Claims

1. A plastic strip (1), having a longitudinal extent (2) and, perpendicular thereto, a strip width (3) and a strip thickness (4),
wherein the plastic strip (1) comprises an at least partially crystalline, thermoplastic plastic material,
said plastic material being stretched monoaxially, or predominantly monoaxially, in the direction of the longitudinal extent (2), and
wherein the plastic strip (1), when viewed in the direction of the longitudinal extent (2) and in the direction of the strip width (3), has a continuous cross-section in each case, and wherein the strip width (3) and the longitudinal extent (2) form an upper (5) and a lower surface (6), said surfaces (5, 6) being spaced apart from each other by the strip thickness (4), and
wherein at least one of the surfaces (5, 6) has an embossment (7), said embossment (7) being formed by embossing impressions (8) distributed over the strip width (3) and over the longitudinal extent (2), said distributed embossing impressions (8) of the embossment (7) forming columns in the direction of the longitudinal extent (2) and rows in the direction of the strip width (3),
**characterized in that**
- in a top view of the embossing impression (8), the boundary line (12) thereof is formed by a closed oval curve,
- the embossing impression (8) has a length (9), a width (10), and a depth (11) extending in the direction of the strip width (4), wherein
viewed in the longitudinal extent (2), a row spacing (14) between two consecutively arranged embossing impressions (8) is 2 to 2.5 times the length (9) of the embossing impression (8), and viewed in the band width (3), a column spacing (13) between two adjacently arranged embossing impressions (8) is less than or equal to twice the width (10) of the embossing impression (8).

2. The plastic strip according to claim 1, **characterized in that** the boundary line (12) of the embossing impression (8) is formed to be elliptical or oval.

3. The plastic strip according to claim 2, **characterized in that** the length (9) has values in the region of 1.0 mm - 2.8 mm and the width (10) has values in the region of 0.5 mm - 1.2 mm, wherein the value combinations 2.0 x 0.84 mm, or 1.25 x 0.52 mm, or 2.5 x 1.05 mm respectively are preferred.

4. The plastic strip according to claim 1, **characterized in that** the boundary line (12) of the embossing impression (8) is formed to be circular.

5. The plastic strip according to claim 4, **characterized in that** the diameter (18) of the embossing impression (8) is in the region of 0.8 mm - 1.6 mm, preferably the diameter (18) amounts to 0.89 mm or 1.42 mm.

6. The plastic strip according to one of claims 1 to 5, **characterized in that** the length (9) of the embossing impression (8) is oriented in the direction of the longitudinal extent (2) and the width (10) of the embossing impression (8) is oriented in the direction of the strip width (3).

7. The plastic strip according to one of claims 1 to 6, **characterized in that** the orientation of the columns is pivoted by an angle in relation to the longitudinal extent (2) and/or the orientation of the rows is pivoted by an angle in relation to the strip width (3).

8. The plastic strip according to one of claims 1 to 7, **characterized in that** a column offset (15) and a row offset (16) are provided between consecutively arranged rows when viewed in the direction of the longitudinal extent (2), and in particular, the column offset (15) is 50% of the column spacing (13) and the row offset (16) is 50% of the row spacing (14).

9. The plastic strip according to one of claims 1 to 8, **characterized in that** the depth (11) of the embossing impression (8) is in the region of 50 µm - 300 µm, in particular 150 µm.

10. The plastic strip according to one of claims 1 to 9, **characterized in that** both surfaces (5, 6) comprise an embossment (7).

11. The plastic strip according to claim 10, **characterized in that** the embossment (7) is different on both surfaces, and in particular the respective embossing impressions (8) of the two embossments (7) have a different boundary line (12).

12. The plastic strip according to claim 10 or 11, **characterized in that**, in the top view of the plastic strip (1), an offset is provided in the direction of the longitudinal extent (2) and/or an offset is provided in the direction of the strip width (3) between the embossment (7) on the two surfaces (5, 6).

13. The plastic strip according to claim 12, **characterized in that** the offset is 50% of the column spacing (13) and/or 50% of the row spacing (14).

14. The plastic strip according to one of claims 10 to 13, **characterized in that**, in the top view of the plastic strip (1), the orientation of the two embossments (7) is pivoted by an angle in relation to one another, in particular by 90°.

15. The plastic strip according to claim 14, **characterized in that** the angle is 90° and that the embossing impressions (8) of the two embossments (7) are designed such that, if the two embossments (7) are arranged without pivoting, they coincide with respect to their length (9) and width (10), and/or their width (10) and diameter.

16. The plastic strip according to any of claims 1 to 15, wherein the boundary line (12) comprises straight sections and/or different curve radii.

## Revendications

1. Bande de matière plastique (1) avec une extension longitudinale (2) et, perpendiculairement à celle-ci, une largeur de bande (3) et une épaisseur de bande (4), la bande de matière plastique (1) comprenant une matière plastique thermoplastique au moins partiellement cristalline,
cette matière plastique étant étirée dans la direction de l'extension longitudinale (2) de manière monoaxiale ou majoritairement de manière monoaxiale,
la bande de matière plastique (1) présentant, vue dans la direction de l'extension longitudinale (2) et dans la direction de la largeur de bande (3), une section transversale continue et
la largeur de bande (3) et l'extension longitudinale (2) formant des surfaces supérieure (5) et inférieure (6), ces surfaces (5, 6) étant éloignées entre elles par l'épaisseur de bande (4) et
au moins une des surfaces (5, 6) comprenant un gaufrage (7), ce gaufrage (7) étant constitué d'empreintes de gaufrage (8) disposées de manière répartie sur la largeur de bande (3) et dans l'extension longitudinale (2), ces empreintes de gaufrage (8), disposées de manière répartie, du gaufrage (7) formant, dans la direction de l'extension longitudinale (2), des colonnes, et, dans la direction de la largeur de bande (3), des lignes, **caractérisée en ce que**
- en vue de dessus de l'empreinte de gaufrage (8), sa ligne d'enveloppe (12) est constituée d'une courbe ovale fermée,
- l'empreinte de gaufrage (8) présente une longueur (9) et une largeur (10) et une profondeur (11) s'étendant dans la direction de l'épaisseur de bande (4), moyennant quoi
vue dans l'extension longitudinale (2), une distance entre les lignes (14) entre deux empreintes de gaufrage (8) disposées l'une derrière l'autre, représente de 2 à 2,5 fois la longueur (9) de l'empreinte de gaufrage (8) et, vue dans la largeur de bande (3), une distance entre les colonnes (13) entre deux empreintes de gaufrage (8) disposées l'une à côté de l'autre est inférieure ou égale au double de la largeur (10) de l'empreinte de gaufrage (8).

2. Bande de matière plastique selon la revendication 1, **caractérisée en ce que** la ligne d'enveloppe (12) de l'empreinte de gaufrage (8) présente une forme elliptique ou une forme d'œuf.

3. Bande de matière plastique selon la revendication 2, **caractérisée en ce que** la longueur (9) présente une valeur de l'ordre de 1,0 mm à 2,8 mm et la largeur (10) présente une valeur de l'ordre de 0,5 mm à 1,2 mm, les combinaisons de valeurs 2,0 x 0,84 mm resp. 1,25 mm x 0,52 mm resp. 2,5 x 1,05 mm étant préférées.

4. Bande de matière plastique selon la revendication 1, **caractérisée en ce que** la ligne d'enveloppe (12) de l'empreinte de gaufrage (8) présente une forme circulaire.

5. Bande de matière plastique selon la revendication 4, **caractérisée en ce que** la valeur du diamètre (18) de l'empreinte de gaufrage (8) est de l'ordre de 0,8 mm à 1,6 mm, de préférence le diamètre (18) est égal à 0,89 mm ou 1,42 mm.

6. Bande de matière plastique selon l'une des revendications 1 à 5, **caractérisée en ce que** la longueur (9) de l'empreinte de gaufrage (8) est orientée dans la direction de l'extension longitudinale (2) et la largeur (10) de l'empreinte de gaufrage (8) est orientée dans la direction de la largeur de bande (3).

7. Bande de matière plastique selon l'une des revendications 1 à 6, **caractérisée en ce que** l'orientation des colonnes par rapport à l'extension longitudinale (2) et/ou l'orientation des lignes par rapport à la largeur de bande (3) est pivotée d'un angle.

8. Bande de matière plastique selon l'une des revendications 1 à 7, **caractérisée en ce que**, vu dans la direction de l'extension longitudinale (2), entre des lignes les unes derrière les autres, il existe un décalage de colonnes (15) et un décalage de lignes (16), plus particulièrement le décalage de colonnes (15) représente 50 % de la distance entre les colonnes (13) et le décalage des lignes (16) représente 50 % de la distance entre les lignes (14).

9. Bande de matière plastique selon l'une des revendications 1 à 8, **caractérisée en ce que** la profondeur (11) de l'empreinte de gaufrage (8) est de l'ordre de 50 µm à 300 µm, plus particulièrement de 150 µm.

10. Bande de matière plastique selon l'une des revendications 1 à 9, **caractérisée en ce que** les deux surfaces (5, 6) présentent un gaufrage (7).

11. Bande de matière plastique selon la revendication 10, **caractérisée en ce que** les gaufrages (7) des deux surfaces sont différents, plus particulièrement **en ce que** les empreintes de gaufrage (8) des deux gaufrages (7) présentent des lignes d'enveloppe (12) différentes.

12. Bande de matière plastique selon la revendication 10 ou 11, **caractérisée en ce que**, en vue de dessus de la bande de matière plastique (1), entre les gaufrages (7) des deux surfaces (5, 6), il existe un décalage en direction de l'extension longitudinale (2) et/ou un décalage dans la direction de la largeur de bande (3).

13. Bande de matière plastique selon la revendication 12, **caractérisée en ce que** le décalage représente 50 % de la distance entre les colonnes (13) et/ou 50 % de la distance entre les lignes (14).

14. Bande de matière plastique selon l'une des revendications 10 à 13, **caractérisée en ce que**, en vue de dessus de la bande de matière plastique (1), l'orientation des deux gaufrages (7) entre eux est pivoté d'un angle, plus particulièrement de 90°.

15. Bande de matière plastique selon la revendication 14, **caractérisée en ce que** l'angle est de 90° et **en ce que** les empreintes de gaufrage (8) des deux gaufrages (7) sont réalisées de façon à ce que, dans le cas d'une disposition non pivotée des deux gaufrages (7), ceux-ci coïncident en ce qui concerne leur longueur (9) et leur largeur (10) resp. leur largeur (10) et leur diamètre.

16. Bande de matière plastique selon l'une des revendications 1 à 15, **caractérisée en ce que** la ligne d'enveloppe (12) présente, en partie, des portions droites et/ou différents rayons de courbure.
